**Europäisches Patentamt**

(19) **European Patent Office**

**Office européen des brevets**

(11) Numéro de publication: **0 187 794**
**B1**

(12) # FASCICULE DE BREVET EUROPÉEN

(45) Date de publication du fascicule du brevet:
08.06.88

(51) Int. Cl.⁴: **F 25 B 27/00**, F 25 B 17/08

(21) Numéro de dépôt: **85903299.7**

(22) Date de dépôt: **02.07.85**

(86) Numéro de dépôt international:
**PCT/FR 85/00181**

(87) Numéro de publication internationale:
**WO 86/00691 (30.01.86 Gazette 86/03)**

(54) **DISPOSITIF D'ECHANGE THERMIQUE, UTILISABLE COMME REFRIGERATEUR SOLAIRE A ABSORPTION INTERMITTENTE.**

(30) Priorité: **06.07.84 FR 8410819**

(43) Date de publication de la demande:
**23.07.86 Bulletin 86/30**

(45) Mention de la délivrance du brevet:
**08.06.88 Bulletin 88/23**

(84) Etats contractants désignés:
**BE DE LU NL SE**

(73) Titulaire: **UNIVERSITE DE NANCY I, 24, rue Lionnois, B.P. 3137, F-54013 Nancy Cédex (FR)**

(72) Inventeur: **FLECHON, Jean, 1, allée des Bergeronnettes, F-54220 Mazzeville (FR)**
Inventeur: **GODMEL, Gervais, La Trésorière, F-54280 Montcel- sur- Seilles (FR)**

(74) Mandataire: **Phélip, Bruno, c/o Cabinet Harlé & Phélip 21, rue de la Rochefoucauld, F-75009 Paris (FR)**

(56) Documents cité:
DE-A-2 739 514
FR-A-1 134 385
FR-A-2 377 589
FR-A-2 471 562
FR-A-2 501 347
GB-A-436 402
US-A-2 253 907
US-A-3 270 512

Revue de Physique Appliquée, Vol. 17, September 1982, pages 577-584, Fléchon et al.: "Emploi de capteurs solaires cylindro-paraboliques pour la réfrigération dans les zones tropicales"
Revue de Physique Appliquée, Vol. 14, January 1979, pages 97-105, Fléchon et al.: "Recherche d'un couple frigorigène adapté à la réfrigération solaire en zone tropicale"
Revue Pratique du Froid, Vol. 12, May 1956, pages 33-

(56) Documents cité: (suite)
36, Ghilardi et al.: "Le réfrigérateur solaire"

## Description

La présente invention a pour objet un dispositif d'échange thermique, notamment utilisable comme réfrigérateur solaire à absorption intermittente, et plus particulièrement destiné aux pays tropicaux privés de toute énergie autre que l'énergie solaire. En effet, les besoins en froid des zones tropicales déshéritées sont essentiels pour assurer la survie de leurs occupants. La conservation des denrées périssables, en particulier des viandes et des vaccins ne peut être assurée sans réfrigération. Or ces contrées appartiennent généralement à des pays pauvres et sont privées de toute ressource énergétique autre que le soleil.

Jusqu'à présent de nombreuses études ont été entreprises afin de permettre d'utiliser l'énergie solaire pour actionner des machines frigorifiques.

On peut citer par exemple FR-A-2 501 347, FR-A-1 134 385 et le US-A-3 270 512, comme illustration de la technique antérieure. En particulier, en laboratoire, de nombreuses expériences ont été mises en oeuvre afin de déterminer le couple frigorigène qui permettrait d'obtenir les meilleurs rendements, voir par exemple l'article de Fléchon et al. dans la Revue de Physique Appliquée, volume 14, janvier 1979, pages 97-105. De nombreux problèmes se sont posés notamment au niveau des fonctionnements diurne et nocturne de réfrigérateurs de ce type, et les expériences de laboratoire ne se sont pas traduites par des réalisations industrielles fiables. En outre, les réalisations industrielles hypothétiques se seraient heurtées au prix de revient important des dispositifs annexes destinés notamment à donner au générateur absorbeur la position sensiblement la plus avantageuse par rapport au mouvement du soleil.

A la suite de recherches particulièrement étendues dans le domaine de l'utilisation de l'énergie solaire, la Demanderesse a mis au point un réfrigérateur solaire à absorption intermittente obviant aux inconvénients des réfrigérateurs solaires de l'art antérieur.

Un objet de la présente invention est de fournir un réfrigérateur solaire susceptible de fonctionner de façon autonome avec un cycle de réfrigération de 24 heures sans aucune autre source d'énergie que l'énergie solaire.

Un autre objet de la présente invention est d'éviter que se produise dans le circuit de réfrigération, une remontée en température accidentelle dans la cuve isolante, et ce sans mettre en oeuvre d'échangeur particulièrement sophistiqué, mais seulement un condenseur refroidi par l'air ambiant.

Encore un autre objet de la présente invention est de réaliser un réfrigérateur solaire de conception à la fois simple et robuste, sans avoir à utiliser de pièces mobiles ni d'eau, évitant ainsi la corrosion intérieure, tout en évitant des interventions trop fréquentes de l'usager pour le réglage de l'appareil, ce réfrigérateur solaire pouvant être fabriqué à un prix de revient très compétitif.

La présente invention a donc pour objet un dispositif d'échange thermique, notamment utilisable comme réfrigérateur actionné au moyen de l'énergie solaire par absorption intermittente, ce dispositif comportant, montés sur un bâti, un générateur absorbeur, un condenseur et un évaporateur disposé dans une cuve isolante, le générateur absorbeur comportant au moins un élément générateur absorbeur constitué par un système de focalisation des rayons solaires selon une droite focale, ce système coopérant avec un élément tubulaire creux dont l'axe coïncide avec ladite droite focale, et qui renferme un agencement d'amenée du gaz, cet élément tubulaire creux étant chargé avec une substance absorbante susceptible de créer avec le gaz un coup le frigorigène performant, ce dispositif étant caractérisé en ce que sont prévus un clapet de non retour entre le générateur et le condenseur ainsi qu'une vanne d'arrêt, cette vanne d'arrêt qui est disposée dans la cuve isolante de l'évaporateur, étant contrôlée par la différence de pression entre le générateur et le condenseur de façon à fermer l'accès du condenseur à l'évaporateur, lorsque la pression dans le condenseur est sensiblement égale à celle dans le générateur, mais s'ouvrant lorsque la pression dans le condenseur, isolé du générateur par le clapet de non retour, est soumis à une pression supérieure à celle régnant dans le générateur, cette différence étant dans une plage prédéterminée.

L'invention est en outre remarquable par les points suivants: la vanne d'arrêt comporte à sa partie inférieure un détendeur qui accroît l'effet réfrigérant au moment du passage du liquide de frigorigène; le système de focalisation est constitué par un miroir cylindroparabolique recouvert par une vitre destinée à ajouter l'effet de serre à la focalisation; l'agencement d'amenée du gaz est un élément tubulaire creux monté coaxialement dans l'élément tubulaire renfermant la substance absorbante, et comportant un certain nombre de trous traversants; périphériquement à l'élément tubulaire interne est prévu un treillis présentant une largeur de maille appropriée pour s'opposer au passage de la substance absorbante; le couple frigorigène est constitué par un halogénure de métal alcalinoterreux, de préférence du chlorure de calcium, et du gaz ammoniac; les éléments constitutifs du générateur absorbeur sont montés sur le plan supérieur du bâti, ce plan supérieur présentant par rapport au plan horizontal du sol une inclinaison égale en degrés à la latitude du lieu de positionnement du dispositif thermique; entre le générateur et le condenseur est monté un clapet de non retour, entre l'évaporateur et le générateur est monté un clapet de non retour; un réservoir tampon destiné à collecter le gaz qui, condensé à chaud, se refroidit à la température ambiante, est monté entre le condenseur et l'évaporateur en aval de la vanne d'arrêt.

D'autres avantages et caractéristiques de l'invention apparaîtront à la lecture de la description suivante d'une forme de réalisation non l'imitative du réfrigérateur solaire à absorption intermittente, en référence aux dessins annexés dans lesquels:

Fig. 1 est une vue partielle en perspective, partiellement arrachée, du réfrigérateur solaire de l'invention;

Fig. 2 est une vue en perspective d'un élément générateur-absorbeur constitutif du réfrigérateur solaire de l'invention;

Fig. 3 est une vue en coupe longitudinale axiale d'un organe constitutif du générateur-absorbeur;

Fig. 4 est un schéma synoptique du réfrigérateur solaire de l'invention; et

Fig. 5 est une vue en élévation partiellement arrachée en coupe longitudinale axiale d'une vanne d'arrêt utilisé selon l'invention.

En se référant aux dessins, on voit que le générateur 1 est constitué d'un certain nombre d'éléments générateurs-absorbeurs, chacun d'entre eux étant constitué par un élément de focalisation 5 constitué par un boîtier ou bac 5a à l'intérieur duquel est monté un miroir cylindroparabolique 5b recouvert par une vitre 5d destinée à ajouter l'effet de serre à la focalisation. Dans l'axe de la droite focale du miroir cylindroparabolique 5b, on a prévu des saignées verticales 5c. Ces saignées 5c étant destinées à recevoir un élément tubulaire absorbeur 6, qui se trouvera ainsi centré coaxialement à la droite focale du miroir cylindroparabolique 5b.

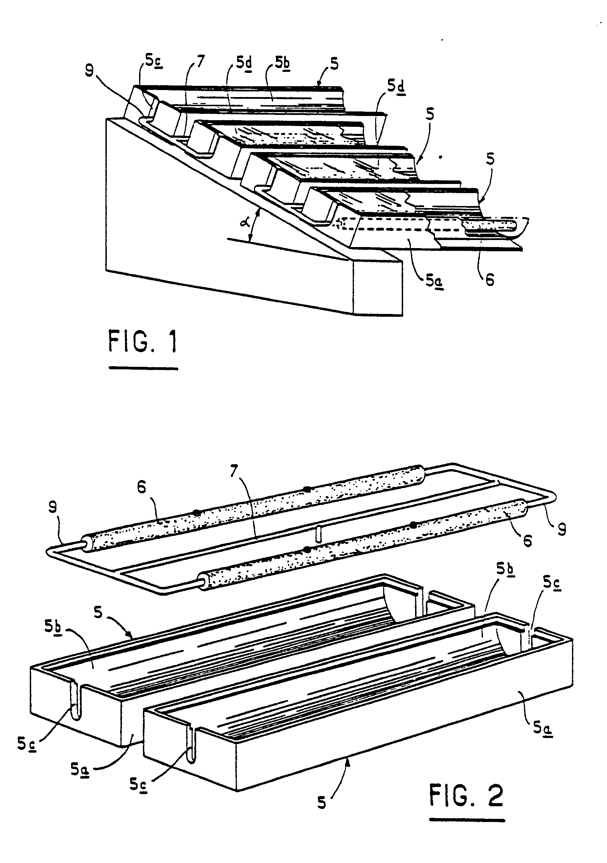

On remarquera plus particulièrement sur la figure 2 que les éléments 6 sont couplés par paires à un système d'amenée du gaz ammoniac, de façon à former un système de tube quadrangulaire, les éléments 6 étant disposés symétriquement et parallèlement à un tube central 7.

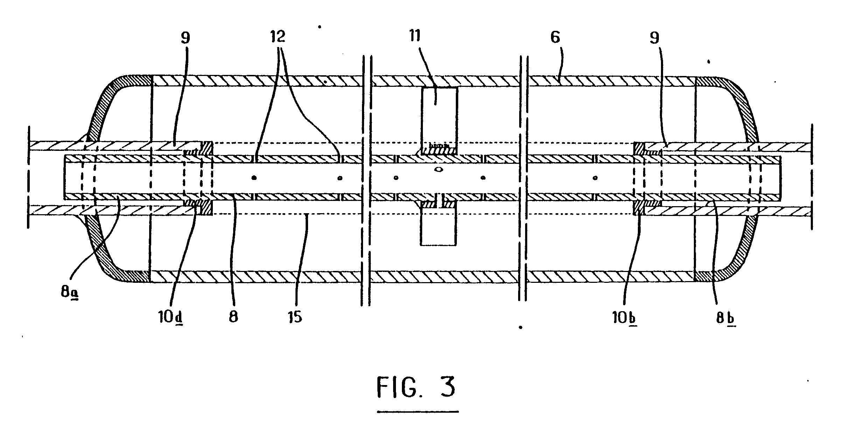

Comme représenté sur la figure 3, chaque élément générateur-absorbeur 6 comporte coaxialement un tube 8 dont les extrémités 8a, 8b viennent s'emmancher coaxialement dans les prolongements des raccordements tubulaires 9 soudés à l'élément 6. Des joints 10a, 10b sont prévus pour garantir l'étanchéité au niveau du raccordement de l'élément tubulaire 8 et du tuyau 9. L'élément tubulaire interne 8 est centré à l'intérieur de l'élément tubulaire 6 par l'intermédiaire d'au moins une patte 11, et comporte un certain nombre de trous traversants 12. Autour de l'élément 8 est également prévu un treillis 15 présentant une dimension de maille permettant le passage du gaz ammoniac tout en empêchant que les grains de surface absorbante contenus dans l'élément 6 ne viennent au contact de l'élément 8 pour boucher les trous 12.

De préférence, les éléments 6, 8 et 9 sont constitués par des tubes en acier, la face extérieure de l'élément 6 étant recouverte d'un revêtement sélectif constitué par des feuilles de recouvrement en un matériau approprié pour son absorption actinique, ou bien obtenu par un traitement de surface approprié des éléments tubulaires 6.

Par miroir cylindroparabolique 5b, on entend des miroirs courbes de section parabolique définissant une surface parabolique ayant pour foyer une droite. Chaque miroir 5a est protégé par une vitre 5b et peut être tourné, de plus ou moins 23° autour de l'axe commun fixe. Des butées de limitation de rotation, non représentées aux dessins, sont disposées sur le bâti de façon à limiter la rotation desdits ensembles de miroirs cylindroparaboliques. Les ensembles 5, 6 sont disposés sur le plan supérieur d'un bâti, ce plan supérieur faisant avec le plan horizontal du bâti un angle d'inclinaison $\alpha$ égal en degrés à la latitude du lieu de fonctionnement du dispositif thermique, les bacs 5a étant montés de façon à pouvoir être pivotés de $\pm$ 25° par rapport à $\alpha$.

Le condenseur 2 est constitué par des tubes d'acier à ailettes 2a et raccordé en aval à un réservoir tampon 4 en acier qui est lui-même raccordé à un évaporateur 3a disposé dans une cuve isolante 3, et constitué d'un assemblage de tubes en acier. Selon une forme de réalisation avantageuse de l'invention, on dispose au-dessus de cet évaporateur 3a et en contact avec lui un réservoir de stockage de froid, non représenté aux dessins, et constitué avantageusement par une enceinte souple à l'intérieur de laquelle on a chargé un mélange eutectique, par exemple de l'antigel, ce réservoir pouvant être remplacé par des compartiments plein d'eau si l'on désire simplement obtenir des pains de glace.

Le dispositif thermique selon la présente invention comporte également un agencement de vannes ou clapets destiné à lui assurer l'autonomie de fonctionnement. Cet agencement est avantageusement constitué de trois clapets automatiques I, II, III, fonctionnant uniquement sous l'influence de la pression du gaz ammoniac, et le contraignant à circuler pendant des périodes parfaitement définies en fonction du temps et des paramètres extérieurs, toujours dans le même sens.

Le clapet I qui est monté entre le générateur et le condenseur, permet, lors de l'échauffement du sel qui dissocie l'ammoniacate, le passage du gaz comprimé vers le condenseur et interdit sa réabsorption directe par le sel durant l'évaporation nocturne.

Le clapet II, monté entre l'évaporateur et le générateur, isole l'évaporateur 3a du générateur pendant la phase diurne afin que le gaz libéré au générateur 1 ne vienne pas se condenser directement dans l'évaporateur 3a et l'échauffer, ce qui rendrait impossible la conservation de produits ou denrées périssables. Ce clapet II s'ouvre la nuit à la suite de la dépression régnant dans le générateur 1 et permet ainsi le passage du gaz aspiré par le sel partiellement dissocié, le blocage à la pression pouvant atteindre 30 bars (3 MPa), tandis que le passage à la dépression est négligeable.

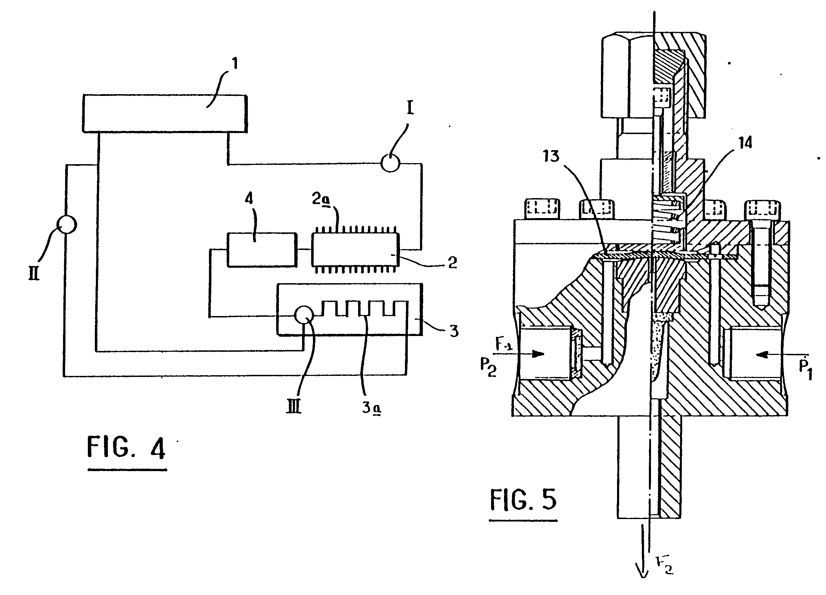

Le condenseur 2, l'évaporateur 3a et le générateur 1 sont réunis par une vanne d'arrêt ou clapet différentiel III, ce clapet fait office de système bloqueur de gaz et simultanément filtre le liquide. Ce clapet, représenté sur la figure 5, est normalement fermé lorsque la pression P2 au condenseur est sensiblement la même que la pression P1 au générateur, et comporte à sa partie inférieure un détendeur, par exemple un capillaire dont le rôle est d'obtenir du froid par détente supplémentaire du liquide lorsqu'en fin de journée l'ammoniac va passer du réservoir tampon à l'évaporateur. Il s'ouvre lorsque la différence de pression entre le condenseur et l'évaporateur est de l'ordre de 4 à 5 bars, ceci dans un double but, d'assurer, d'une part, une bonne fermeture lorsque les pressions sont voisines, et, d'autre part de réaliser une détente à l'ouverture. Le soir, après un cycle de fonctionnement, la pression P1 au générateur est inférieure à la pression P2 au condenseur et le passage de liquide est prévu vers l'évaporateur 2a selon les flèches F1, F2. La journée, lorsque la pression P1 au générateur est supérieure à la pression P2 au condenseur, cette pression de gaz P1 vient solliciter la membrane 13 de la vanne d'arrêt et à l'encontre de l'action du ressort 14 vient fermer le passage du liquide selon F1, F2. Cette vanne permet à l'appareil de fonctionner en continu, malgré certaines intermittences du rayonnement solaire, auquel cas le concenseur 2 ne contiendra plus que du gaz qui, sans la présence de cette vanne III irait, par l'intermédiaire du condenseur 2, se condenser dans l'évaporateur 3a en le réchauffant suivant le principe de Watt ou de la paroi froide le condenseur ne jouant plus son rôle.

Bien que des couples frigorigènes à base d'un halogénure de métal alcalino-terreux et d'ammoniac puissent être utilisés dans le dispositif thermique de réfrigération selon l'invention, une des originalités de l'invention consiste à mettre en oeuvre un couple frigorigène Ca-Cl$_2$, NH$_3$ qui a déjà eu un certain essor à l'échelon industriel, mais dont le mode d'utilisation, qui tire l'énergie nécessaire à la dissociation des ammoniacates générés par ledit couple frigorigène, est réalisé uniquement par rayonnement solaire.

Les avantages de ce couple frigorigène du point de vue absorption chimique sont certains du fait, d'une part, qu'il n'existe pas de tension de vapeur de solide, et d'autre part, que le gaz ammoniac présente une forte chaleur latente de vaporisation L$_v$ = 1260,35 kJ/kg à 0°C et une température critique très basse, O$_c$ = 132,4°C si on la compare à celle de l'eau.

On obtient ainsi selon l'invention, dans une enceinte isolée de volume utile pouvant varier de 50 litres à quelques mètres cubes, une température comprise entre - 3°C et + 8°C, c'est -à-dire conforme à la norme OMS de conservation des vaccins, et ce dans une ambiance diurne extérieure d'environ 43°C pour une température nocturne de 30°C, grâce à la coopération entre des éléments générateur-absorbeur disposés à l'intérieur de miroirs cylindroparaboliques, coaxialement avec la droite focale de ces derniers, et d'un dispositif permettant un contrôle de l'écoulement entre le condenseur et l'évaporateur, grâce au montage entre ces derniers d'une vanne d'arrêt ou clapet différentiel.

Il est ainsi clair que l'invention n'est nullement limitée à cette forme de réalisation.

L'élément unité du générateur peut être, par exemple, un module formé de deux tubes focaux (6) occupant chacun un bac capteur (5), ces tubes étant réunis par un tube central (7) situé entre les bacs, permettant ainsi une extension indéfinie de la surface captante.

En effet, la réalisation du générateur sous forme modulaire se prête à des extensions indéfinies dont la surface peut varier de quelques mètres carrés à quelques dizaines de mètres carrés sans que soit modifiée la chaîne suivante: condenseur-évaporateur sinon dans ses dimensions et ses possibilités. En particulier, une climatisation domestique est envisageable en dégageant l'évaporateur de la cuve isolante.

Outre les applications de la machine thermique solaire de l'invention comme réfrigérateur et climatiseur, elle peut être utilisée également la nuit comme pompe de chaleur dans les zones désertiques en raison de la température relativement élevée (70°C environ) du couple frigorigène durant l'absorption nocturne. Enfin, une présentation simplifiée du montage peut être utilisée pour la fabrication de glace sans souci particulier de conservation alimentaire.

**Revendications**

1. Dispositif d'échange thermique, notamment utilisable comme réfrigérateur actionné au moyen de l'énergie solaire par absorption intermittente, ce dispositif comportant, montés sur un bâti, un générateur absorbeur (1), un condenseur (2) et un évaporateur (3a) disposé dans une cuve isolante (3), le générateur absorbeur (1), comportant au moins un élément générateur absorbeur constitué par un système de focalisation des rayons solaires (5) selon une droite focale, ce système coopérant avec un élément tubulaire creux (6) dont l'axe coïncide avec ladite droite focale, et qui renferme un agencement d'amenée du gaz (8), cet élément tubulaire creux (6) étant chargé avec une substance absorbante susceptible de créer avec le gaz un couple frigorigène performant, ce dispositif étant caractérisé en ce que sont prévus un clapet de non retour I entre le générateur (1) et le condenseur (2) ainsi qu'une vanne d'arrêt III, cette vanne d'arrêt qui est disposée dans la cuve isolante (3) de l'évaporateur (3a), étant contrôlée par la différence de pression entre le générateur (1) et le condenseur (2) de façon à fermer l'accès du condenseur (2) à l'évaporateur (3a) lorsque la pression dans le condenseur (2), est sensiblement égale à celle dans le générateur (1), mais s'ouvrant lorsque la pression dans le condenseur (2) isolé du générateur (1) par le clapet de non retour I, est soumis à une pression supérieure à celle régnant dans le générateur (1), cette différence étant dans une plage prédéterminée.

2. Dispositif selon la revendication 1, caractérisé en ce que la vanne d'arrêt III comporte une membrane (13), qui sous l'action de la pression régnant dans le générateur, agit à l'encontre d'un ressort (14) pour fermer le passage entre le condenseur (2) et l'évaporateur (3a).

3. Dispositif selon la revendication 1 ou 2, caractérisé en ce que la vanne d'arrêt III comporte à sa partie inférieure un détendeur qui accroît l'effet réfrigérant au moment du passage du liquide frigorigène.

4. Dispositif selon la revendication 1, caractérisé en ce que le système de focalisation (5) est constitué par un miroir cylindroparabolique (5b) recouvert par une vitre (5d) destinée à ajouter l'effet de serre à la focalisation.

5. Dispositif selon la revendication 1 ou 4, caractérisé en ce que l'agent d'amenée de gaz est un élément tubulaire creux (8) monté coaxialement à l'intérieur de l'élément tubulaire chargé (6) et comportant un certain nombre de trous traversants (12).

6. Dispositif selon la revendication 5, caractérisé en ce que, entre les deux éléments tubulaires coaxiaux (6, 8) est prévu un treillis (15) de largeur de maille appropriée pour s'opposer au passage de la substance absorbante renfermée dans l'élément tubulaire (6).

7. Dispositif selon l'une quelconque des revendications 1 à 6, caractérisé en ce que le couple frigorigène est constitué par un halogénure de métal alcalino-terreux, par exemple du chlorure de calcium, et du gaz ammoniac.

8. Dispositif selon l'une quelconque des revendications 1 à 7, caractérisé en ce que les éléments constitutifs (5b, 6) du générateur absorbeur (1) sont montés sur le plan supérieur du bâti, ce plan supérieur présentant par rapport au plan horizontal dudit bâti, un angle d'inclinaison égal en degrés à la latitude du lieu de fonctionnement du dispositif thermique, les bacs (5a) porteurs des miroirs (5b) étant montés de façon à pouvoir être pivotés de ± 25° par rapport à α.

9. Dispositif selon l'une quelconque des revendications 1 à 8, caractérisé en ce que le clapet de non retour I est agencé de façon à permettre, lors de la génération du gaz dans le générateur, le passage du gaz comprimé dans le générateur 1 vers le condenseur 2, et interdire sa réabsorption directe dans le générateur durant l'évaporation nocturne.

10. Dispositif selon l'une quelconque des revendications 1 à 7, caractérisé en ce qu'entre l'évaporateur et le générateur est monté un clapet de non retour II qui isole l'évaporateur (3a) du générateur (1) durant la phase diurne afin que le gaz libéré du générateur ne vienne pas se condenser directement dans l'évaporateur (3a) et l'échauffer, ce clapet II s'ouvrant la nuit pour permettre le passage vers le générateur (1) du gaz aspiré par le sel partiellement dissocié, le blocage à la pression pouvant atteindre 30 bars (3 MPa), tandis que le passage à la dépression est négligeable.

11. Dispositif selon l'une quelconque des revendications 1 à 10, caractérisé en ce qu'il est prévu entre le condenseur (2) et l'évaporateur (3a), un réservoir tampon (4) destiné à collecter le gaz qui, condensé à chaud, se refroidit à la température ambiante.

12. Dispositif selon l'une quelconque des revendications 1 à 11, caractérisé en ce que l'élément unité du générateur est un module formé de deux tubes focaux (6) occupant chacun un bac capteur (5), ces tubes étant réunis par un tube central (7) situé entre les bacs permettant ainsi une extension indéfinie de la surface captante.

13. Application du dispositif selon l'une quelconque des revendications 1 à 12, comme appareil de climatisation.

14. Application du dispositif selon l'une quelconque des revendications 1 à 12, comme pompe à chaleur.

15. Application du dispositif selon l'une quelconque des revendications 1 à 12, comme appareil de fabrication de glace.

**Patentansprüche**

1. Wärmetauschervorrichtung, insbesondere verwendbar als Kühlmaschine, die mittels Solarenergie durch intermittierende Absorption betätigt ist, wobei diese Vorrichtung auf einem Gestell montiert einen Absorbergenerator (1), einen Kondensor (2) und einen Verdampfer (3a) aufweist, der in einer isolierenden Wanne (3) angeordnet ist, wobei der Absorbergenerator (1) mindestens ein Absorbergeneratorelement aufweist, welches durch ein Fokussierungssystem für Sonnenstrahlen (5) gemäß einer Brennpunktsstrecke gebildet ist, dieses System mit einem hohlen, rohrförmigen Element (6) zusammenwirkt, dessen Achse mit der Brennpunktsstrecke zusammenfällt und das eine Einrichtung für Gaszufuhr (8) einschließt und wobei dieses hohle, rohrförmige Element (6) mit einer absorbierenden Substanz beschickt ist, die geeignet ist, mit dem Gas ein Leistungskältemittelpaar zu erzeugen, wobei diese Vorrichtung dadurch gekennzeichnet ist, daß ein Rückschlagventil I zwischen dem Generator (1) und dem Kondensor (2) sowie ein Absperrventil III vorgesehen sind, wobei dieses Absperrventil, welches in der isolierenden Wanne (3) des Verdampfers (3a) angeordnet ist, durch die Druckdifferenz zwischen dem Generator (1) und dem Kondensor (2) derart überwacht wird, daß der Zugang des Kondensors (2) zum Verdampfer (3a) geschlossen wird, wenn der Druck in dem Kondensor (2) im wesentlichen gleich dem im Generator (1) ist, aber geöffnet wird, wenn der Druck in dem Kondensor (2), welcher durch das Rückschlagventil I vom Generator (1) getrennt ist, einem Druck unterworfen ist, der größer als derjenige ist, welcher in dem Generator (1) herrscht, wobei diese Differenz in einem vorbestimmten Bereich liegt.

2. Vorrichtung nach Anspruch 1, dadurch gekennzeichnet, daß das Rückschlagventil III eine Membran (13) aufweist, die unter der Wirkung des in dem Generator herrschenden Druckes gegen eine Feder (14) wirkt, um den Durchgang zwischen dem Kondensor (2) und dem Verdampfer (3a) zu schließen.

3. Vorrichtung nach Anspruch 1 oder 2, dadurch gekennzeichnet, daß das Absperrventil III an seinem unteren Teil ein Druckminderventil aufweist, welches die Tiefkühlwirkung im Augenblick des Durchgangs der Kältemittelflüssigkeit anwachsen läßt.

4. Vorrichtung nach Anspruch 1, dadurch gekennzeichnet, daß das Fokussiersystem (5) durch einen zylinderparabolischen Spiegel (5b) gebildet ist, der durch eine Glasscheibe (5d) bedeckt ist, die dazu bestimmt ist, zur Fokussierung den Treibhauseffekt hinzuzufügen.

5. Vorrichtung nach Anspruch 1 oder 4, dadurch gekennzeichnet, daß das Gaszuführmittel ein hohles, rohrförmiges Element (8) ist, welches koaxial im Inneren des beschickten, rohrförmigen Elementes (6) angebracht ist und eine gewisse Anzahl von quer durchgehenden Löchern (12) aufweist.

6. Vorrichtung nach Anspruch 5, dadurch gekennzeichnet, daß zwischen den zwei koaxialen, rohrförmigen Elementen (6, 8) ein Gitter (15) einer Maschengröße vorgesehen ist, die geeignet ist, um sich dem Durchgang der absorbierenden Substanz zu widersetzen, die in dem rohrförmigen Element (6) enthalten ist.

7. Vorrichtung nach einem der Ansprüche 1 bis 6, dadurch gekennzeichnet, daß das Kältemittelpaar aus einem Erdalkalimetallhalogenid, z. B. Calciumchlorid, und Ammoniaksalz besteht.

8. Vorrichtung nach einem der Ansprüche 1 bis 7, dadurch gekennzeichnet, daß die den Absorbergenerator (1) bildenden Elemente (5b, 6) auf der oberen Ebene des Gestells angebracht sind, wobei diese obere Ebene bezüglich der horizontalen Ebene des Gestells einen gleichen, zur Breite des Funktionsortes der Wärmevorrichtung abgesetzten Neigungswinkel aufweist, wobei die Trägerbehälter (5a) für die Spiegel (5b) derart angebracht sind, daß sie um ± 25° bezüglich α geschwenkt werden können.

9. Vorrichtung nach einem der Ansprüche 1 bis 8, dadurch gekennzeichnet, daß das Rückschlagventil 1 derart angeordnet ist, daß während der Erzeugung des Gases in dem Generator der Durchgang des in dem Generator (1) komprimierten Gases zum Kondensor (2) hin ermöglicht wird und seine direkte Wiederabsorption im Generator während der nächtlichen Verdampfung verhindert wird.

10. Vorrichtung nach einem der Ansprüche 1 bis 7, dadurch gekennzeichnet, daß zwischen dem Verdampfer und dem Generator ein Rückschlagventil II angebracht ist, welches den Verdampfer (3a) vom Generator (1) während der Tagesphase trennt, damit das vom Generator freigesetzte Gas nicht direkt im Verdampfer (3a) kondensiert und ihn erwärmt, wobei das Ventil II sich in der Nacht öffnet, um den Durchgang des durch teilweise dissoziiertes Salz aufgesaugten Gases zu ermöglichen, wobei die Druckblockierung 30 bar (3 MPa) erreichen kann, während der Durchlaß bei Unterdruck vernachlässigbar ist.

11. Vorrichtung nach einem der Ansprüche 1 bis 10, dadurch gekennzeichnet, daß zwischen dem Kondensor (2) und dem Verdampfer (3a) ein Speicherpuffer (4) vorgesehen ist, der dazu bestimmt ist, das Gas zu sammeln, welches heiß kondensiert ist und sich auf die Umgebungstemperatur abkühlt.

12. Vorrichtung nach einem der Ansprüche 1 bis 11, dadurch gekennzeichnet, daß die Elementeinheit des Generators ein Modul ist, welches aus zwei Brennpunktsrohren (6) gebildet ist, die jeweils einen Aufnahmebehälter (5) einnehmen, wobei diese Rohre durch ein Mittelrohr (7) vereinigt werden, welches zwischen den Behältern angeordnet ist, wodurch eine unbestimmte Ausdehnung der Aufnahmeoberfläche ermöglicht ist.

13. Anwendung der Vorrichtung nach einem der Ansprüche 1 bis 12 als Klimatisierungsapparat.

14. Anwendung der Vorrichtung nach einem der Ansprüche 1 bis 12 als Wärmepumpe.

15. Anwendung der Vorrichtung nach einem der Ansprüche 1 bis 12 als Eisherstellungsapparat.

**Claims**

1. Heat-exchange device which can be used especially as a refrigerator actuated by means of solar energy as a result of intermittent absorption, this device comprising, mounted on a frame, an absorbing generator (1), a condenser (2) and an evaporator (3a) arranged in an insulating vessel (3), the absorbing generator (1) comprising at least one absorbing generator element consisting of a system (5) for focusing the solar radiation in a focal line, this system interacting with a hollow tubular element (6), the axis of which coincides with the said focal line and which contains a gas supply arrangement (8), this hollow tubular element (6) being filled with an absorbent substance capable of producing, together with the gas, a high-performance cold-generating couple, this device being characterized in that there are a non-return valve I between the generator (1) and the condenser (2) and a stop valve III, this stop valve located in the insulating vessel (3) of the evaporator (3a) being controlled by means of the pressure difference between the generator (1) and the condenser (2), so as to shut off access from the condenser (2) to the evaporator (3a) when the pressure in the condenser (2) is substantially equal to that in the generator (1), but opening when the pressure in the condenser (2) isolated from the generator (1) by means of the non-return valve I is subjected to a pressure higher than that prevailing in the generator (1), this difference being within a predetermined range.

2. Device according to Claim 1, characterized in that the stop valve III has a diaphragm (13) which, under the action of the pressure prevailing in the generator, acts counter to a spring (14) in order to close the passage between the condenser (2) and the evaporator (3a).

3. Device according to Claim 1 or 2, characterized in that the stop valve III has, in its lower part, a pressure reducer which increases the refrigerating effect at the moment when the cold-generating liquid passes through.

4. Device according to Claim 1, characterized in that the focusing system (5) consists of a parabolic trough concentrator mirror (5b) covered with a glass (5d) intended for adding the greenhouse effect to the focusing.

5. Device according to Claim 1 or 4, characterized in that the gas supply agent is a hollow tubular element (8) mounted coaxially inside the filled tubular element (6) and having a certain number of through-holes (12).

6. Device according to Claim 5, characterized in that, between the two coaxial tubular elements (6, 8), there is a necking (15) of a mesh width suitable for preventing the passage of the absorbent substance contained in the tubular element (6).

7. Device according to any one of Claims 1 to 6, characterized in that the cold-generating couple is formed by an alkaline-earth metal halide, for example calcium chloride, and ammonia gas.

8. Device according to anyone of Claims 1 to 7, characterized in that the component elements (5b, 6) of the absorbing generator (1) are mounted on the upper plane of the frame, this upper plane having relative to the horizontal plane of the said frame an angle of inclination equal in degrees to the latitude of the operating location of the heat-exchange device, the troughs (5a) carrying the mirrors (5b) being mounted so as to be pivotable $\pm$ 25° relative to $\alpha$.

9. Device according to any one of Claims 1 to 8, characterized in that the non-return valve I is designed so as to make it possible, during the generation of gas in the generator, for the compressed gas in the generator (1) to pass towards the condenser (2), and to prevent it from being reabsorbed directly in the generator during night-time evaporation.

10. Device according to any one of Claims 1 to 7, characterized in that mounted between the evaporator and the generator is a non-return valve II which isolates the evaporator (3a) from the generator (1) during the daytime phase, so that the gas released from the generator does not condense directly in the evaporator (3a) and heat it, this valve II opening at night to allow the gas taken up by the partially decomposed salt to pass towards the generator (1), the pressure block being capable of reaching 30 bars (3 MPa), whilst passage under a partial vacuum is negligible.

11. Device according to any one of Claims 1 to 10, characterized in that between the condenser (2) and the evaporator (3a) there is a buffer tank (4) intended for collecting the gas which, condensed hot, cools at ambient temperature.

12. Device according to any one of Claims 1 to 11, characterized in that the unit element of the generator is a module formed from two focal tubes (6), each occupying a concentrating trough (5), these tubes being connected by means of a central tube (7) located between the troughs, thus allowing an indefinite extension of the concentrating surface.

13. Use of the device according to any one of Claims 1 to 12 as an air-conditioning appliance.

14. Use of the device according to any one of Claims 1 to 12 as a heat pump.

15. Use of the device according to any one of Claims 1 to 12 as an ice-making appliance.

FIG. 1

FIG. 2

FIG. 3

FIG. 5

FIG. 4